Europäisches Patentamt

European Patent Office

Office européen des brevets

(19)

(11) Veröffentlichungsnummer: **0 090 136**
**B1**

(12) **EUROPÄISCHE PATENTSCHRIFT**

(45) Veröffentlichungstag der Patentschrift:
06.11.85

(51) Int. Cl.⁴: **B 60 H 1/00**

(21) Anmeldenummer: **83100555.8**

(22) Anmeldetag: **22.01.83**

(54) Heizungs- und Belüftungsanlage für Kraftfahrzeuge.

(30) Priorität: 26.03.82 DE 3211148

(43) Veröffentlichungstag der Anmeldung:
05.10.83 Patentblatt 83/40

(45) Bekanntmachung des Hinweises auf die Patenterteilung:
06.11.85 Patentblatt 85/45

(84) Benannte Vertragsstaaten:
BE DE FR GB IT SE

(56) Entgegenhaltungen:
DE - A - 2 007 226
DE - A - 2 159 742
DE - A - 2 208 377
DE - A - 3 107 324
DE - C - 310 478
FR - A - 1 040 167
FR - A - 1 266 641
FR - A - 1 299 631
GB - A - 922 811

(73) Patentinhaber: **FORD-WERKE AKTIENGESELLSCHAFT, Ottoplatz 2 Postfach 21 03 69, D-5000 Köln 21 (DE)**
(84) Benannte Vertragsstaaten: **BE DE IT SE**

(73) Patentinhaber: **FORD MOTOR COMPANY LIMITED, Eagle Way, Brentwood Essex CM13 3BW (GB)**
(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**
(84) Benannte Vertragsstaaten: **FR**

(72) Erfinder: **Knab, Rüdiger, An den Kreutzmorgen 7, D-5000 Köln 60 (DE)**

(74) Vertreter: **Ritzkowsky, Harald, Dipl.-Ing., Ford-Werke Aktiengesellschaft Patentabteilung Z/DRR-2 Ottoplatz 2, D-5000 Köln 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung geht aus von einer Heizungs- und Belüftungsanlage für Kraftfahrzeuge der im Oberbegriff des Patentanspruchs 1 aufgezeigten Art.

Aus der DE-A-22 08 377 ist eine Heizungs- und Belüftungsanlage dieser Art bekannt, bei der ein quaderförmiger Wärmetauscher in seiner Kaltstellung hochkant an einer vertikalen Wand eines Frischluftkanales anliegt und um eine untere Querachse in seine den Frischluftkanal voll überspannende Warmstellung verschwenkbar ist.

Die bekannte Heizungs- und Belüftungsanlage weist verschiedene Nachteile auf. Der eine Nachteil besteht darin, dass auch bei in Kaltstellung befindlichem Wärmetauscher die daran vorbeistreichende Frischluft in unerwünschter Weise aufgeheizt wird. Ein weiterer Nachteil besteht darin, dass eine aufwendige Umlenkung des Frischluftstromes erforderlich ist, um eine günstige senkrechte Durchströmung des Wärmetauschers zu erreichen.

Weitere Nachteile ergeben sich aus der schwer zugänglichen Anordnung des Wärmetauschers und dem im Fahrgastraum liegenden Gebläse, wodurch einerseits der Austausch eines defekten Wärmetauschers schwierig und andererseits ein störendes Wahrnehmen von Gebläsegeräuschen im Fahrgastraum zu erwarten ist.

Die Erfindung hat sich zum Ziel gesetzt, folgende technische Probleme auf einfache Weise zu lösen:

a) die Heizungs- und Belüftungsanlage soll ein kompaktes Bauvolumen besitzen;

b) der Wärmetauscher soll zu Reparaturzwecken und zu Umrüstzwecken leicht austauschbar angeordnet sein;

c) der Wärmetauscher soll so angeordnet sein, dass bei Kaltstellung eine unerwünschte Aufheizung der Frischluft vermieden und bei Warmstellung eine optimale Erwärmung der Frischluft erzielt wird;

d) die Temperaturverteilung zu den Austrittsdüsen soll nach einer vorgegebenen Regelcharakteristik abstimmbar sein;

e) die gesamte Anlage soll einen möglichst geringen Strömungswiderstand aufweisen, und

f) störende Gebläsegeräusche, die im Fahrgastraum hörbar sind, sollen vermieden werden, indem das Gebläse in an sich bekannter Weise in einer motorraumseitigen Luftkammer angeordnet wird, wodurch eine bessere Abschirmung der Geräusche erzielt wird und darüber hinaus in bekannter Weise durch Vorschalten eines Verdampfers die Heiz- und Belüftungsanlage zu einer vollwertigen Klimaanlage umrüstbar ist.

Gemäss der Erfindung werden diese technischen Probleme gelöst, indem eine Heizungs- und Belüftungsanlage nach dem Oberbegriff des Patentanspruchs 1 die im Kennzeichenteil des Patentanspruchs 1 aufgezeigten Merkmale aufweist.

In den Ansprüchen 2 bis 10 sind weitere zweckmässige Ausführungsformen der Erfindung erläutert.

Dadurch, dass der Wärmetauscher aus einem wärmeisolierten Raum mit einer definierten, gleichbleibenden Lage etwa senkrecht zum Frischluftstrom in diesen hineinschiebbar ist, wird einerseits ein kompaktes Bauvolumen erzielt und andererseits ein leichter Austausch des Wärmetauschers sichergestellt. Weiterhin wird in Kaltstellung des Wärmetauschers eine unerwünschte Aufheizung der Frischluft vermieden, während infolge der günstigen Durchströmung bei Warmstellung eine optimale Aufheizung der Frischluft erreicht wird.

Dadurch, dass der Wärmetauscher linear oder bogenförmig in den Frischluftstrom hineinschiebbar ist, kann sowohl eine Schiebe- als auch eine Schwingenführung angewendet werden.

Dadurch, dass der Wärmetauscher nur um einen Teil seiner Tiefe verschiebbar ist, und eine wärmeisolierende Abdeckklappe den in den Frischluftstrom ragenden Teil des Wärmetauschers wahlweise abdeckt oder freigibt, kann eine weitere Verringerung des Bauvolumens bei gleichgünstig bleibender Funktionsweise erzielt werden.

Die Erfindung wird anhand zweier, in den beiliegenden Zeichnungen gezeigter Ausführungsbeispiele näher erläutert. Es zeigt:

Fig. 1 einen vertikalen Schnitt durch eine Heizungs- und Belüftungsanlage;

Fig. 2 die rechte Hälfte des Schnittes entlang der Linie II-II in Fig. 1;

Fig. 3 einen ähnlichen Schnitt wie Fig. 1, jedoch mit veränderten Auslassöffnungen;

Fig. 4 die rechte Hälfte des Schnittes entlang der Linie IV-IV in Fig. 3;

Fig. 5 eine horizontale Draufsicht auf den Anschlussbereich des Wärmetauschers, und

Fig. 6 einen horizontalen Schnitt durch eine weitere Ausführung des Anschlussbereiches am Wärmetauscher.

In den Figuren besteht eine Heizungs- und Belüftungsanlage für Kraftfahrzeuge aus einer an sich bekannten Gebläseeinheit 1, die in einer unterhalb der Windschutzscheibe liegenden Frischluftkammer angeordnet ist und aus einer Heizungseinheit 2, die innerhalb des Fahrgastraumes des Kraftfahrzeuges unterhalb des Instrumentenbrettes angeordnet ist.

Die Heizungseinheit 2 besteht im wesentlichen aus einem oberen Gehäuseteil 3 und einem unteren Gehäuseteil 4, zwischen denen ein quaderförmiger Wärmetauscher 5 angeordnet ist.

Das obere Gehäuseteile 3 bildet einen oberen Teil 6 eines Frischluftkanales, von dem ein Frischluftkanal 7 abzweigt, der über übliche Anschlussschläuche mit Mitteldüsen am Instrumentenbrett verbunden ist.

Das untere Gehäuseteil 4 bildet den unteren Teil 8 eines Frischluftkanales sowie seitliche Anschlusskanäle 9 zu Seitendüsen, Anschlusskanäle 10 zu Defrosterdüsen und Anschlusskanäle 11 zu Fussraumauslässen.

Ein von der Gebläseeinheit 1 kommender, durch Pfeile 12 angedeuteter Frischluftstrom streicht an dem in den Frischluftkanal 6/8 einragenden Teil des Wärmetauschers 5 im wesentlichen ungehindert vorbei und wird im Bereich der seitlichen Anschlusskanäle 10 und 11 über eine wahlweise einstellbare Einflügelklappe 13 entsprechend verteilt.

Der Wärmetauscher 5 ist hierbei in einem wärmeisolierten Raum 14 angeordnet und wird an seinem in den Frischluftkanal 6/8 einragenden Teil von einer wärmeisolierten Abdeckklappe 15 abgedeckt.

Der Wärmetauscher 5 ist in üblicher Weise mit seitlichen Wasserkästen 16 versehen, von denen üblicherweise einer mit einem Zulauf- und Abführrohr 17 bzw. 18 verbunden ist. An beiden unteren Längskanten der Wasserkästen 16 können Zahnstangenprofile 19 vorgesehen sein, die mit entsprechenden Ritzeln 20 in Eingriff stehen, die über eine entsprechende Handhabe zum Verschieben des Wärmetauschers 5 betätigt werden können.

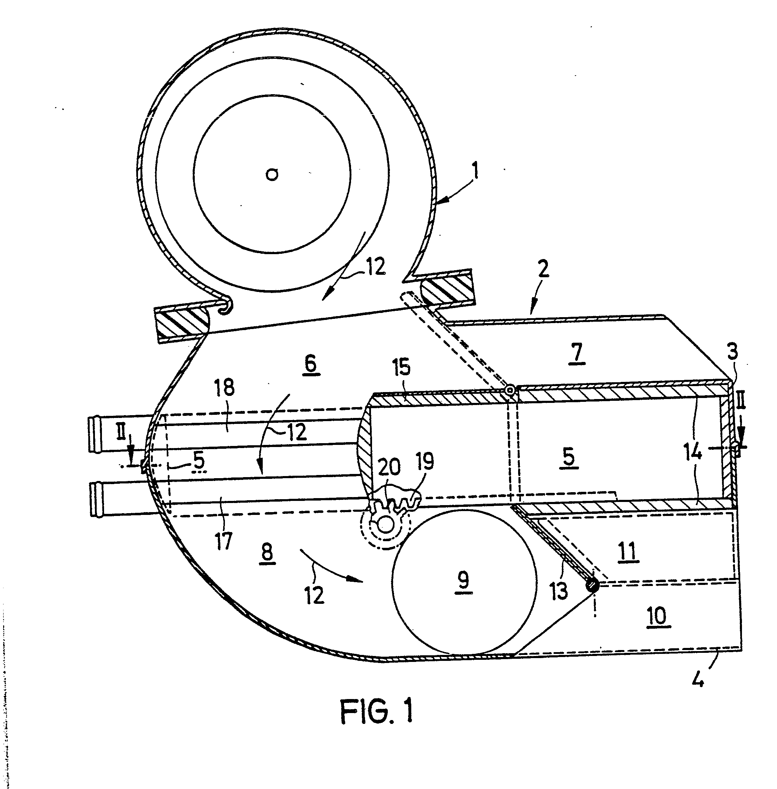

Werden die Ritzel 20 betätigt, so wird der Wärmetauscher 5 über die Zahnstangen 19 in Fig. 1 nach links bewegt und befindet sich schliesslich in seiner in gestrichelten Linien angedeuteten Warmstellung. Gleichzeitig mit der Bewegung des Wärmetauschers 5 wird die isolierte Abdeckklappe 15 angehoben und verschliesst ganz oder nur teilweise den Frischluftkanal 7 zu den Mitteldüsen.

Bei der in gestrichelten Linien gezeigten Warmstellung des Wärmetauschers 5 muss somit der gesamte Frischluftstrom 12 den Wärmetauscher durchströmen.

Hierbei ist es besonders günstig, dass die Strömungsrichtung im wesentlichen gleichbleibt.

Wird der Wärmetauscher 5 nur zu einem Teil in den Frischluftkanal 6/8 hineingeschoben, so ergibt sich durch die im wesentlichen gleichbleibende Strömungsrichtung im unteren Teil des Frischluftkanales 8 eine Luftschichtung, bei der zur Gehäuseaussenseite kühlere Luft und zum Gehäuseinnern wärmere Luft vorhanden ist. Bei der gewählten Anordnung der Anschlusskanäle 11 für den Fussraum im oberen Bereich ist diese Luftschichtung durchaus erwünscht.

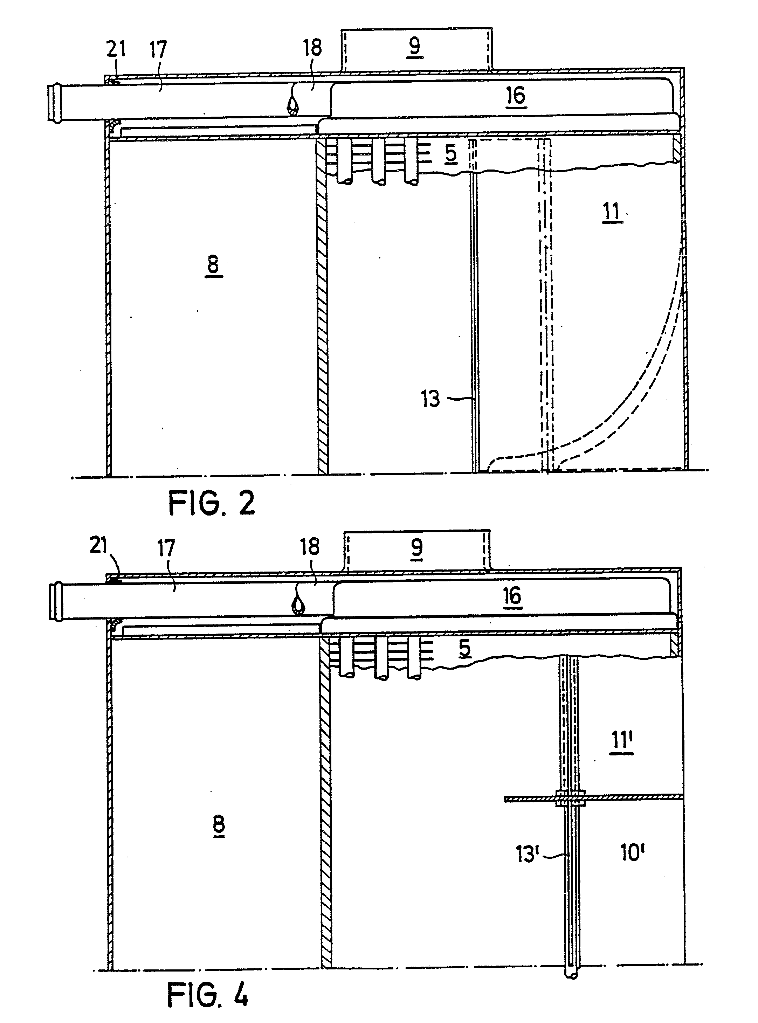

Wie aus Fig. 2 zu ersehen ist, sind die Anschluss- und Rückführrohre 17 und 18 des Wärmetauschers 5 über entsprechende Dichtungen 21 luftdicht aus dem Gehäuse hinausgeführt. Ein Anschluss der Anschluss- und Rückführrohre 17 und 18 an das Kühlsystem der Brennkraftmaschine kann hierbei in bekannter Weise über Schlauchleitungen erfolgen.

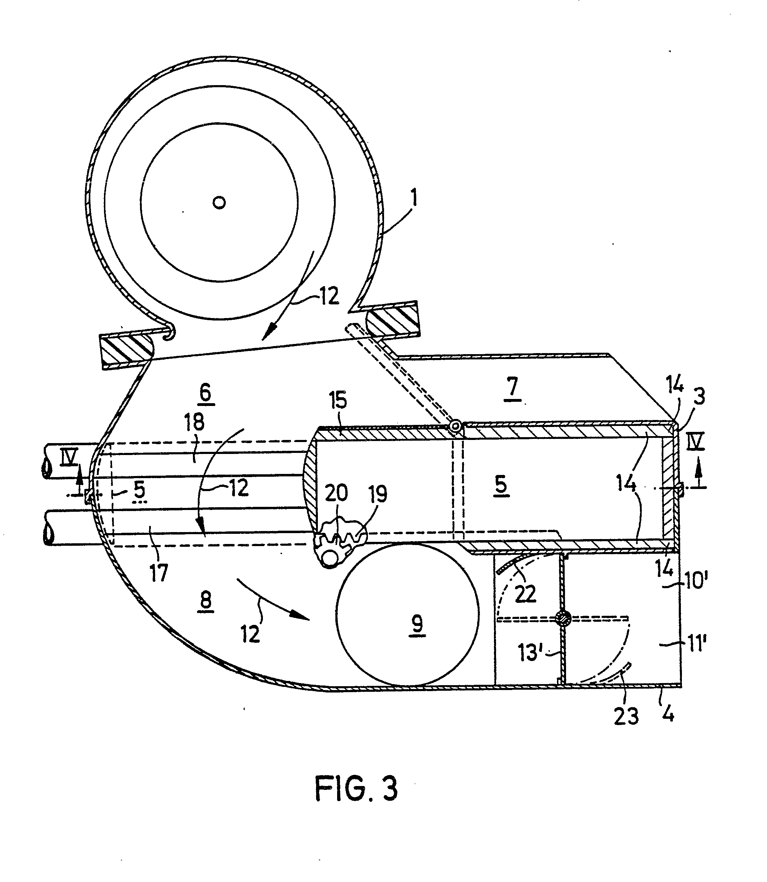

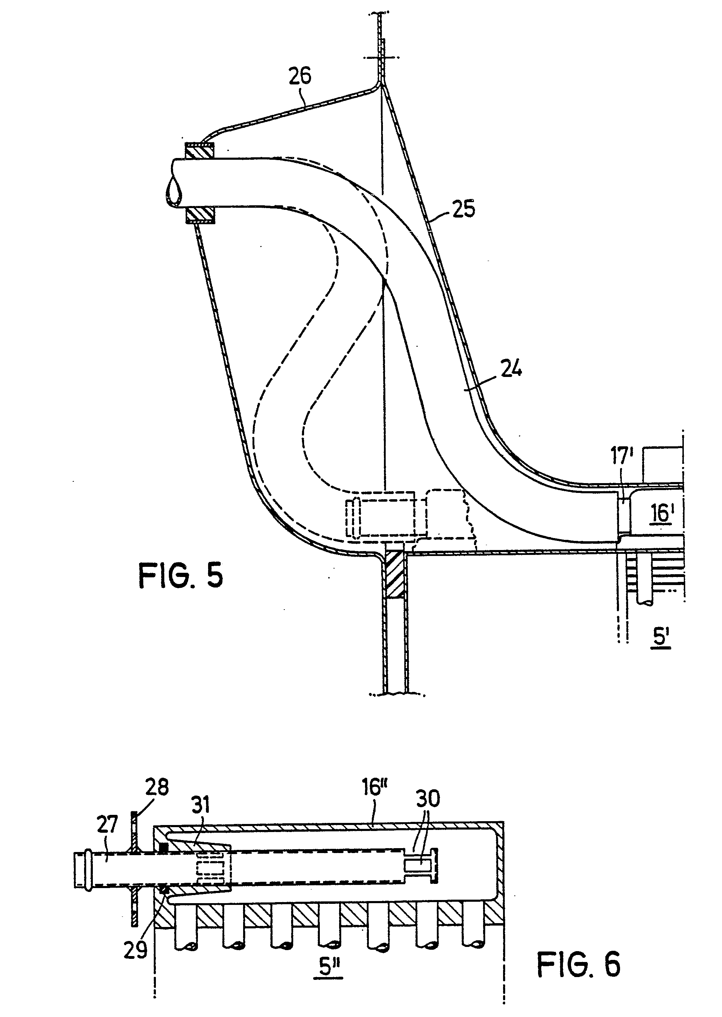

In den Fig. 3 und 4 ist eine weitere Ausführungsform gezeigt, die im wesentlichen mit der in den Fig. 1 und 2 gezeigten übereinstimmt und dementsprechend mit den gleichen Bezugszeichen versehen ist. Eine Abweichung besteht hier nur im Bereich der Anschlusskanäle zu den Defrosterdüsen und den Fussraumauslässen, die hier nicht vertikal übereinanderliegend, wie in Fig. 1, sondern horizontal nebeneinanderliegend angeordnet sind.

Dementsprechend werden sie über eine Doppelflügelklappe 13' gesteuert und der Anschlusskanal für die Defrosterdüsen ist mit 10' und der für die Fussraumauslässe ist mit 11' bezeichnet. Durch Blenden 22 oder alternativ durch Blenden 23 können die Warm- und Kaltluftanteile zu den Austrittsöffnungen in gewünschter Weise angepasst werden.

In Fig. 5 ist eine günstige Anschlussmöglichkeit für den verschiebbaren Wärmetauscher gezeigt. Ein Wärmetauscher 5' ist an seinem Wasserkasten 16' mit verhältnismässig kurzen Anschlussstutzen 17' versehen. Ein Formschlauch 24 ist einerseits mit diesen Anschlussstutzen 17' und andererseits mit entsprechenden Anschlüssen am Kühlmantel der Brennkraftmaschine über herkömmliche Schlauchschellen verbunden. Die Heizungseinheit ist hierbei mit einer zusätzlichen seitlichen Abdeckhaube 25 verbunden und die Spritzwand des Fahrzeuges weist eine Tasche 26 auf, in der der Formschlauch 24 so untergebracht ist, dass er aus seiner in vollen Linien gezeigten Lage bei in Kaltstellung befindlichem Wärmetauscher 5' in seine in gestrichelten Linien gezeichnete verformte Lage bei in Warmstellung befindlichem Wärmetauscher 5' bewegen kann.

Eine solche S-förmige Schlauchverbindung vom verschiebbaren Wärmetauscher zum Kühlmantel der Brennkraftmaschine kann auch in vertikaler Richtung nach oben mit Durchtritt durch die Gebläseöffnung vorgenommen werden.

Fig. 6 zeigt eine weitere günstige Anschlussmöglichkeit für den verschiebbaren Wärmetauscher. Ein Wärmetauscher 5'' ist mit einem besonders ausgebildeten Wasserkasten 16'' versehen. Ein Anschlussrohr 27 ist über einen Flansch 28 an einem oberen Gehäuseteil axial festgelegt und erstreckt sich über eine Dichtung 29 abgedichtet weit in den Innenraum des Wasserkastens 16'', der hier bei in Warmstellung befindlichem Wärmetauscher 5'' gezeigt ist. Das Anschlussrohr 27 ist an seinem inneren Ende mit Öffnungen 30 versehen, durch die Kühlmittel in das Innere des Wasserkastens eintreten kann.

Bewegt sich der Wärmetauscher 5'' aus seiner in Fig. 6 gezeigten Warmstellung nach rechts in seine Kaltstellung, so gelangen die Öffnungen 30 in den Bereich eines Kragens 31 im Innern des Wasserkastens 16'' und werden hierdurch verschlossen.

Auf diese Weise kann zusätzlich zur luftseitigen Temperaturregelung ohne wesentlichen Aufwand eine Wasserabsperrung in Kaltstellung erfolgen.

## Patentansprüche

1. Heizungs- und Belüftungsanlage für Kraftfahrzeuge, mit luftseitiger Temperaturregelung durch einen in seiner wirksamen Oberfläche veränderbar beaufschlagten, in den Frischluftstrom hineinbewegbaren Wärmetauscher und einem diesem zugeordneten Gebläse, dadurch gekennzeichnet, dass der Wärmetauscher (5) aus einem wärmeisolierten Raum (14) mit einer definierten, gleichbleibenden Lage in seiner beaufschlagten Fläche veränderbar etwa senkrecht zum Frischluftstrom (12) in diesen hineinschiebbar ist.

2. Heizungs- und Belüftungsanlage nach Anspruch 1, dadurch gekennzeichnet, dass der Wärmetauscher (5) linear oder bogenförmig in den Frischluftstrom (12) hineinschiebbar ist.

3. Heizungs- und Belüftungsanlage nach den Ansprüchen 1 und 2, dadurch gekennzeichnet, dass der Wärmetauscher (5) nur um einen Teil seiner Tiefe verschiebbar ist und eine wärmeisolierende Abdeckklappe (15) den in Kaltstellung in den Frischluftstrom (12) ragenden Teil des Wärmetauschers (5) wahlweise abdeckt oder freigibt.

4. Heizungs- und Belüftungsanlage nach den Ansprüchen 1 bis 3, dadurch gekennzeichnet, dass die Abdeckklappe (15) in der Warmstellung des Wärmetauschers (5) gleichzeitig einen Frischluftkanal (7) zu Mitteldüsen abdeckt.

5. Heizungs- und Belüftungsanlage nach den Ansprüchen 1 bis 4, dadurch gekennzeichnet, dass die Anschlusskanäle (10 und 11) zu Defrosterdüsen bzw. zu Fussraumauslässen in zwei Ebenen angeordnet sind und über eine über die gesamte Breite der Heizungseinheit verlaufende Einflügelklappe (13) steuerbar sind.

6. Heizungs- und Belüftungsanlage nach den Ansprüchen 1 bis 4, dadurch gekennzeichnet, dass die Luftanschlusskanäle (10' und 11') für Defrosterdüsen bzw. Fussraumauslässe jeweils die gesamte Höhe des Luftkanales einnehmen und über eine Doppelflügelklappe (13') steuerbar sind.

7. Heizungs- und Belüftungsanlage nach den Ansprüchen 1 bis 6, dadurch gekennzeichnet, dass die Anschlusskanäle (10' und 11') zu Defrosterdüsen bzw. Fussraumauslässen mit Blenden (22 oder 23) zur Abstimmung der Temperaturverteilung und Regelcharakteristik der Doppelflügelklappe (13') versehen sind.

8. Heizungs- und Belüftungsanlage nach den Ansprüchen 1 bis 7, dadurch gekennzeichnet, dass der Wärmetauscher (5) an einem Wasserkasten (16) mit langen Anschluss- und Rückführrohren (17 bzw. 18) versehen ist, die über Dichtungen (21) luftdicht aus dem Heizungsgehäuse geführt sind.

9. Heizungs- und Belüftungsanlage nach den Ansprüchen 1 bis 7, dadurch gekennzeichnet, dass der Wärmetauscher (5') an einem Wasserkasten (16') mit kurzen Anschlussstutzen (17') versehen ist, an denen S-förmige oder ähnliche Formschläuche (24) in einem von einer Abdeckhaube (25) und einer Tasche (26) gebildeten Raum zum Motorraum geführt sind.

10. Heizungs- und Belüftungsanlage nach den Ansprüchen 1 bis 7, dadurch gekennzeichnet, dass der Wärmetauscher (5'') ein im Gehäuse über einen Befestigungsflansch (29) axial festgelegtes Anschlussrohr (27) in seinen Wasserkasten (16'') einragend aufnimmt, das mit Öffnungen (30) versehen ist, die von einem Kragen (31) im Inneren des Wasserkastens (16'') verschlossen werden, sobald sich der Wärmetauscher (5'') in seine Kaltstellung bewegt hat.

## Claims

1. A heating and ventilating equipment for motor vehicles with temperature control at the air intake side by a heat exchanger variably chargeable in its effective surface, movable into the fresh air current and with a blower allocated thereto, characterized in that the exchanger (5) is movable in a defined constant orientation from a heat insulated space (14) with its variably chargeable area into the fresh air current (12) practically vertical to the latter.

2. A heating and ventilating equipment as claimed in claim 1, characterized in that the heat exchanger (5) can be inserted into the fresh air current (12) linearly or arcuately.

3. A heating and ventilating equipment as claimed in claims 1 and 2, characterized in that the heat exchanger (5) can be shifted by a part only of its depth and that a heat insulating cover flap (15) optionally covers or uncovers the part of the heat exchanger (5) projecting in the cold position into the fresh air current (12).

4. A heating and ventilating equipment as claimed in claims 1 through 3, characterized in that the cover flap (15) covers in the hot position of the heat exchanger (5) simultaneously a fresh air duct (7) leading to central nozzles.

5. A heating and ventilating equipment as claimed in claims 1 through 4, characterized in that connecting ducts (10 and 11) are allocated to defroster nozzles and foot space outlets respectively, are arranged in two planes and are controllable by a single-blade flap (13) extending over the entire width of the heating unit.

6. A heating and ventilating equipment as claimed in claims 1 through 4, characterized in that the air connecting ducts (10' and 11') for the defroster nozzles and foot space outlets respectively occupy each the total height of the air duct and are controllable by a double-blade flap (13').

7. A heating and ventilating equipment as claimed in claims 1 through 6, characterized in that the connecting ducts (10' and 11') to the defroster nozzles and foot space outlets respectively are fitted with shutters (22 or 23) for adjusting the temperature distribution and regulation characteristic of the double-blade flap (13').

8. A heating and ventilating equipment as claimed in claims 1 through 7, characterized in that the heat exchanger (5') is provided with a header (16) with long connecting and return pipes (17 and 18 respectively), brought out from the heater housing through air-tight seals (21).

9. A heating and ventilating equipment as claimed in claims 1 through 7, characterized in that the heat exchanger (5') is provided with a header (16') with short joining sockets (17') connected to S-shaped or similar flexible tubes (24) leading to the engine space through a space formed by a covering hood (25) and a pocket (26).

10. A heating and ventilating equipment as claimed in claims 1 through 7, characterized in that a joining pipe (27), axially fixed by a mounting flange (29) in the housing of the heat exchanger (5''), protrudes into the header (16'') thereof, the joining pipe (27) being provided with openings (30) closed by a collar (31) inside the header (16'') as soon as the heat exchanger (5'') moves into its cold position.

## Revendications

1. Installation de chauffage et de ventilation pour véhicules à moteur, avec réglage de température côté air à l'aide d'un échangeur de chaleur mis en action de manière réglable en ce qui concerne sa surface active, et déplaçable pour être introduit dans l'écoulement d'air frais, et d'un ventilateur associé à celui-ci, caractérisée en ce que l'échangeur de chaleur (5) peut, à partir d'une chambre thermiquement isolée (14) présentant une position définie demeurant la même, être introduit de manière coulissante dans l'écoulement d'air frais (12), de manière sensiblement perpendiculaire à celui-ci, de manière variable en ce qui concerne sa surface mise en action.

2. Installation de chauffage et de ventilation selon la revendication 1, caractérisée en ce que l'échangeur de chaleur (5) peut être introduit de façon coulissante dans l'écoulement d'air frais (12) de manière rectiligne ou en arc de cercle.

3. Installation de chauffage et de ventilation selon les revendications 1 et 2, caractérisée en ce que l'échangeur de chaleur (5) n'est déplaçable que sur une partie de sa profondeur et en ce qu'un volet de recouvrement isolant thermiquement (15) recouvre ou libère, au choix, la partie de l'échangeur de chaleur (5) qui fait saillie en position froide dans l'écoulement d'air frais (12).

4. Installation de chauffage et de ventilation selon les revendications 1 à 3, caractérisée en ce que, en position chaude de l'échangeur de chaleur (5), le volet de recouvrement (15) recouvre simultanément un conduit d'air frais (7) allant vers les buses centrales.

5. Installation de chauffage et de ventilation selon les revendications 1 à 4, caractérisée en ce que les conduits de raccordement (10 et 11) aux buses de dégivrage et aux évacuations dans le volume réservé aux pieds, sont disposés dans deux plans et peuvent être commandés par l'intermédiaire d'un volet à une aile (13) s'étendant sur toute la largeur du bloc de chauffage.

6. Installation de chauffage et de ventilation selon les revendications 1 à 4, caractérisée en ce que les conduits de raccordement d'air (10' et 11') aux buses de dégivrage et aux évacuations dans le volume réservé aux pieds, occupent chacun toute la hauteur du conduit d'air et peuvent être commandés par l'intermédiaire d'un volet à deux ailes (13').

7. Installation de chauffage et de ventilation selon les revendications 1 à 6, caractérisée en ce que les conduits de raccordement (10' et 11') aux buses de dégivrage et aux évacuations dans le volume réservé aux pieds, sont munis d'écrans (22 ou 23) servant à l'ajustement de la distribution de température et de la caractéristique de réglage du volet à deux ailes (13').

8. Installation de chauffage et de ventilation selon les revendications 1 à 7, caractérisée en ce que l'échangeur de chaleur (5) est muni, sur une boîte d'eau (16), de tubes d'amenée et de retour allongés (17 et 18) qui sortent du carter de chauffage en étant guidés de manière étanche à l'air à travers des joints (21).

9. Installation de chauffage et de ventilation selon les revendications 1 à 7, caractérisée en ce que l'échangeur de chaleur (5') est muni, sur une boîte d'eau (16'), de raccords courts (17') sur lesquels des tuyaux souples conformés en forme de S ou analogue (24) sont dirigés vers le compartiment moteur dans une chambre formée par un capot de recouvrement (25) et une poche (26).

10. Installation de chauffage et de ventilation selon les revendications 1 à 7, caractérisée en ce que l'échangeur de chaleur (5'') reçoit, faisant saillie dans sa boîte d'eau (16''), un tube de raccordement (27) fixé axialement dans le carter par l'intermédiaire d'une bride de fixation (29), et qui est muni d'ouvertures (30) qui sont fermées par un collet (31) situé à l'intérieur de la boîte d'eau (16'') dès que l'échangeur de chaleur (5'') s'est déplacé dans sa position froide.

FIG. 1

FIG. 2

FIG. 4

FIG. 3

FIG. 5

FIG. 6